# EUROPEAN PATENT APPLICATION

(11) **EP 4 185 012 A1**
(43) Date of publication of application: **24.05.2023**
(21) Application number: 21871219.8
(22) Date of filing: 30.08.2021
(51) Int. Cl.: H04W 36/00, H04W 36/14, H04W 36/22, H04W 76/34

(54) **NETWORK SLICE SELECTING METHOD AND APPARATUS, TERMINAL, AND COMPUTER READABLE STORAGE MEDIUM**

(30) Priority: 23.09.2020 CN 202011008760
(71) Applicant: ZTE Corporation, Shenzhen, Guangdong 518057 (CN)
(72) Inventor: GAO, Xiling, Shenzhen, Guangdong 518057 (CN)
(74) Representative: Novagraaf Technologies
(86) International application number: PCT/CN2021/115393
(87) International publication number: WO 2022/062847

(57) **Abstract**

A method for selecting a network slice, comprising: when an application is started, determining a corresponding first access network according to the application (S101); and switching from a second access network to the first access network, and performing communication by means of the first access network (S102). The first access network and the second access network respectively correspond to different network slices; and a correlation of "application->access network->network slice" is achieved in some implementation processes on the basis of a correlation between applications and different access networks, thereby achieving correspondence between applications and network slices.

## Description

### Cross-Reference to Related Application

The present invention is proposed on the basis of Chinese patent application no. 202011008760.9 and filed on 23 September 2020, and claims priority to the Chinese patent application, the disclosure of which is hereby incorporated into the present invention for reference in its entirety.

### Technical Field

The embodiments of the present invention relate to, but are not limited to, the field of communications, and in particular to, but are not limited to, a method and apparatus for selecting a network slice, a terminal, and a computer readable storage medium.

### Background

The mobile communications has developed with each passing day, has penetrated into all aspects of people's work, social interaction and life, and has brought a huge impact on people's way of life, work style, social politics, economy and other aspects. Human society has entered the information age, and the demand for business applications in all aspects has shown explosive growth. In the future, mobile networks will not only provide communication between people, but also provide services for massive Internet of Things devices. For example, for services requiring ultra-high-rate services such as virtual reality and high-definition video, the rate may reach 10 to 100 times of the current rate; for services with low latency service requirements, such as Internet of Vehicles, the end-to-end latency can be reduced by 5 times; the Internet of Things can access 1000 times the number of services, and the service life of the battery can also be prolonged by 10 times.

5th Generation (5G) services will present multi-scenario and differentiated features, for example, mobile Internet services focus on bandwidth, autonomous driving services require low latency and high reliability, and loT services support a huge number of connections. In this regard, the 5G wireless access network and core network have been functionally reconstructed, the physical deployment location of the device processing unit is changed according to the type of service, and independent end-to-end logic is constructed for different types of services on the same physical network by slicing.

5G is an open network that can provide application requirements for vertical industries and leasing services. The 5G bearer network is part of the 5G end-to-end service path. Therefore, the bearer network is required to support the requirements of service isolation and independent operation and maintenance of 5G slicing. Different bearer network slices are allocated to different types of services.

Network slicing is to create multiple virtual networks (or called as slices) on a shared physical network resource by using the virtualization technology. According to different types of bearer services or different tenants, network slicing may slice a physical network into corresponding virtual network (for example, performing slicing according to enhanced mobile broadband (eMBB) services, Ultra-Reliables and Low-Latency Communications (uRLLC) services, and mass machine type communications (mMTC) services of government & enterprise clients, family clients, and 5G), thereby meeting the requirements of different types of services.

Different network slices provide different types of services, and a network slice constitutes a virtual network, and provides a specific mobile network access service for user equipment (UE). However, at present, in some cases, a terminal still can only select, according to the signal strength of a wireless local area network (WLAN), the network an electronic device is to access, which is too monotonous, and cannot flexibly access a specific network slice.

### Summary

The embodiments of the present invention provide a method and apparatus for selecting a network slice, a terminal, and a computer-readable storage medium, which are intended to at least solve one of the related technical problems to a certain extent, comprising the problem that a terminal can only select, according to the signal strength of a WLAN, the network an electronic device is to access, which is too monotonous, and cannot flexibly access a specific network slice.

In view of this, an embodiment of the present invention provides a method for selecting a network slice, comprising: when an application is started, determining a corresponding first access network according to the application; switching from a second access network to the first access network, and performing communication by means of the first access network, the first access network and the second access network respectively corresponding to different network slices.

An embodiment of the present invention also provides an apparatus for selecting a network slice, comprising: a determination module, configured to determine, when an application is started, a corresponding first access network according to the application; a switching module, configured to switch from a second access network to the first access network, and perform communication by means of the first access network, the first access network and the second access network respectively corresponding to different network slices.

An embodiment of the present invention also provides a terminal, comprising: a processor, a memory and a communication bus; the communication bus is configured to implement connection and communication between the processor and the memory; and the processor is configured to execute one or more computer programs stored in the memory, so as to implement the steps of the described method for selecting a network slice.

An embodiment of the present invention further provide a computer storage medium, wherein the computer readable storage medium stores one or more programs, and the one or more programs may be executed by one or more processors, so as to implement the steps of the described method for selecting a network slice.

Additional features and corresponding beneficial effects of the present invention will be set forth in the following description, and it should be understood that at least some of the beneficial effects will be obvious from the illustration of the description of the present invention.

### Brief Description of the Drawings

FIG. 1 is a basic schematic flow diagram of a method for selecting a network slice according to Embodiment I of the present invention;
FIG. 2 is a detailed schematic flow diagram of a method for selecting a network slice according to Embodiment II of the present invention;
FIG. 3 is a schematic diagram of a basic mechanism of an apparatus for selecting a network slice according to Embodiment III of the present invention;
FIG. 4 is a diagram of a basic structure of a terminal according to Embodiment III of the present invention.

### Detailed Description of the Embodiments

To make the objectives, technical solutions and advantages of the present invention clearer, hereinafter the embodiments of the present invention will be further described in detail with reference to the specific embodiments in combination with the accompanying drawings. It should be understood that the specific embodiments described herein are only used to explain the present invention, and are not intended to limit the present invention.

### Embodiment I:

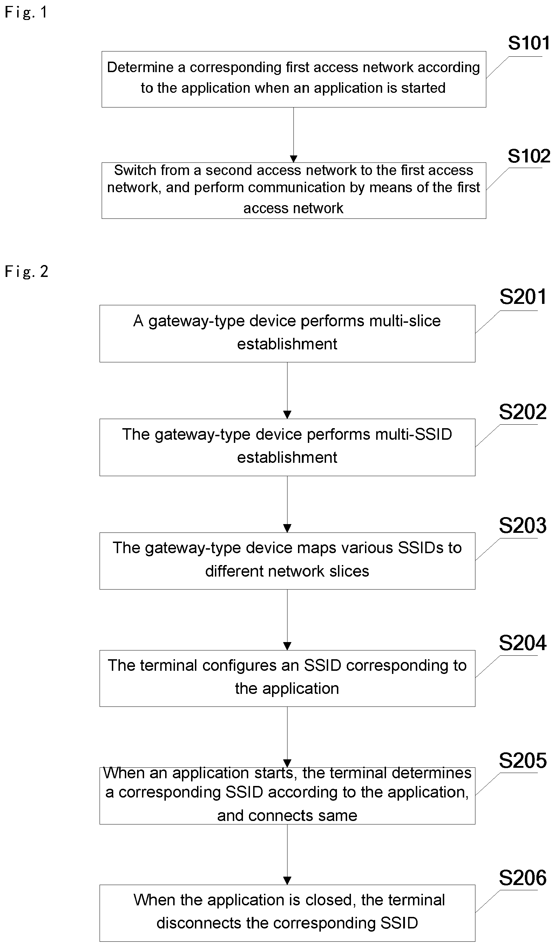

In order to solve the problem that a terminal can only select, according to the signal strength of a WLAN, the network an electronic device is to access, which is too monotonous, and cannot flexibly access a specific network slice, referring to FIG. 1, FIG. 1 shows a method for selecting a network slice, and the method for selecting a network slice comprises:
in S101, when an application is started, determine a corresponding first access network according to the application.

In some embodiments, a corresponding first access network is determined according to an application, wherein the first access network is one of multiple access networks of a network side, and different access networks have different service set identifiers (SSID), and a terminal uses an access network determined according to the application as a corresponding first access network. It should be understood that one access network corresponds to one network slice, and different network slices have different capabilities. For example, a network slice has a high bandwidth network capability; or has a high-definition voice network capability; or, has a low delay network capability, etc., and then different network slices are classified into game network slices, video network slices, fixed access network slices, automatic control network slices, voice call slices, etc. It should be understood that, the described multiple access networks may be sent by the same gateway device or the same network device that supports multiple SSIDs. The plurality of access networks may also be sent by multiple gateway devices and/or multiple network devices respectively.

In some embodiments, determining a corresponding first access network according to the application comprises any one of the following: determining the corresponding first access network according to the type of the application; determining the corresponding first access network according to the name of the application; and determining the corresponding first access network according to the name of the application.

In some embodiments, when the corresponding first access network is determined according to the type of the application, the type of the application is determined first, wherein the type of the application comprises, but is not limited to, a video type, a social application type, a game type, a call communication type, etc.; one application type corresponds to one network slice, i.e. corresponds to one access network, and one network slice may correspond to a plurality of application types; for example, when the application type is a video type, according to the requirement of a video type application on a service rate, an access network corresponding to a network slice having a high bandwidth network capability is acquired as a first access network; when the application type is a game type, an access network corresponding to a network slice having a low-latency network capability is acquired as a first access network; when the application type is a call communication type, an access network corresponding to a network slice having a high-definition voice network capability is acquired as a first access network.

In some embodiments, when a corresponding first access network is determined according to the name of an application, a corresponding network slice is respectively set for each application name, one application name corresponds to one network slice, i.e. corresponds to one access network, and one network slice may correspond to a plurality of application names; for example, when the application name is "Glory of Kings", an access network corresponding to a network slice having a low latency network capability is acquired as a first access network.

In some embodiments, when a corresponding first access network is determined according to the service quality required by an application, the service quality includes, but is not limited to, a delay requirement and a bandwidth requirement, one service quality corresponds to one network slice, i.e., corresponds to one access network, and one network slice may correspond to multiple service qualities; for example, when the delay requirement in the service quality required by the application is low delay, an access network corresponding to a network slice having a low delay network capability is acquired as a first access network.

It should be understood that, the network slice corresponding to each application may be flexibly changed, and the present Embodiment is not used to limit the network slice corresponding to each application.

In some embodiments, before determining the corresponding target access network according to the application, the method further comprises: configuring a first access network corresponding to the application; for example, configuring an access network corresponding to the application by means of the type of the application; configuring an access network corresponding to the application by means of the name of the application; configuring a service name corresponding to the application by means of the service quality required by the application. It should be understood that, before determining a corresponding target access network according to the application, the method further comprises: configuring a default access network. When the corresponding first access network cannot be determined according to the application, the default access network is accessed, and the terminal performs communication on the basis of the default access network.

In some embodiments, starting an application includes, but is not limited to, running an application, switching an application to the front-end, etc., for example, starting an application which is not running, switching an application running in the back-end to the front-end for running, etc.

S102, switch from a second access network to the first access network, and perform communication by means of the first access network.

It should be understood that, the second access network is a network currently used for communication, and may be the described default access network, and the first access network and the second access network respectively correspond to different network slices. The first access network and the second access network may be different access networks sent by the same gateway device or the same network device that supports a multiple SSIDs, and may also be different access networks sent by multiple gateway devices and/or multiple gateway devices respectively.

In some embodiments, switching from the second access network to the first access network, and performing communication by means of the first access network comprise: keeping the connection of the second access network, switching a current communication network from the second access network to the first access network, and performing communication by means of the first access network. For example, after determining the corresponding first access network, when connecting to the first access network, the terminal maintains the connection to the second access network, connects to the second access network and the first access network at the same time, switches the current communication network from the second access network to the first access network, and performs communication by means of the first access network.

In some embodiments, switching from the second access network to the first access network, and performing communication by means of the first access network comprise: disconnecting the second access network, taking the first access network as a current communication network, and performing communication by means of the first access network. For example, after determining the corresponding first access network, when connecting to the first access network, the terminal directly disconnects the second access network and connects only to the first access network, and then uses the first access network as a current communication network, and performs communication by means of the first access network.

In some embodiments, the method for selecting a network slice further comprises: when exiting the application, switching from the first access network to a default access network, and performing communication by means of the default access network. For example, the application is closed, or the application is switched to the back-end for running, or the time for switching the application to the back-end reaches a preset threshold.

The method for selecting a network slice provided by the embodiment of the present invention comprises: when an application is started, determining a corresponding first access network according to the application; and switching from a second access network to the first access network, and performing communication by means of the first access network. The first access network and the second access network respectively correspond to different network slices; and a correlation of "application->access network->network slice" is achieved on the basis of a correlation between applications and different access networks, thereby achieving correspondence between applications and network slices. By means of the present invention, a terminal flexibly selects an access network according to an application, thereby achieving the effect of flexibly selecting a network slice according to the application, and avoiding the problem that a terminal can only select, according to the signal strength of a WLAN, the network an electronic device is to access, which is too monotonous, and cannot flexibly access a specific network slice.

### Embodiment II:

To better understand the present invention, the present embodiment provides a more specific example to describe the method for selecting a network slice. Referring to FIG. 2, FIG. 2 is a schematic flow diagram of a method for selecting a network slice. The method includes:
S201, a gateway-type device performs multi-slice establishment;
in some embodiments, a gateway-type device interacts with a 3rd Generation Partnership Project (3GPP) core network on the basis of the support of a network slice, so as to establish different network slices, wherein each network slice corresponds to different slice functions, each slice function corresponds to a different quality of service (QoS), and the QoS includes, but is not limited to, any one of the following: a high-bandwidth network capability, a high-definition voice network capability, a low-latency network capability, etc., so that different network slices are classified into game network slices, video network slices, fixed access network slices, automatic control network slices, voice call slices, etc.

It should be understood that, during multi-slice establishment, it needs to be confirmed whether the multi-slice establishment succeeds, and if the multi-slice establishment fails, failure information is fed back to a user or an administrator, wherein factors affecting multi-slice establishment include the subscription condition of a device, the support condition of a current network, etc.

S202: the gateway-type device performs multi-SSID establishment;
in some embodiments, SSIDs, of which the quantity corresponding to that of network slices, are established by means of a multi-SSID function of a gateway-type device, and the names of the SSIDs are different, for example, the established names may be "ZTE_SSID_NORMAL", "ZTE_SSID_GAME" and "ZTE_SSID_video", etc. It should be understood that, during SSID establishment, it also needs to be confirmed whether multi-SSID establishment succeeds, and if the multi-SSID establishment fails, failure information is fed back to a user or an administrator, the number of SSIDs supported depends on a support condition of a gateway-type device, and the larger the number of SSIDs supported, the larger the number of network slices supported.

S203, the gateway-type device maps various SSIDs to different network slices.

In some embodiments, a routing correlation between an "SSID network interface" and a "network slice network interface" needs to be established by means of a routing table, i.e. routing configuration is performed by mapping various SSIDs to different network slices, and different SSIDs are embodied as different network ports, i.e. independent routes are configured for different network ports; for example, an SSID "ZTE_SSID_GAME" is mapped to a game network slice having a low-delay network capability, an SSID "ZTE_SSID_video" is mapped to a video network slice having a high-rate network capability, and "ZTE_SSID_NORMAL" is mapped to a fixed access network slice; at the same time, the fixed access network slice can be used as a default network slice; and when there is an application which is not configured with a corresponding network slice or when any application is not started, the default network slice is taken as a current communication network. It should be understood that, during mapping, whether the mapping is successful also needs to be confirmed, and if the mapping fails, failure information is fed back to a user or an administrator.

S204: the terminal configures an SSID corresponding to the application.

In some embodiments, the terminal configuring an SSID corresponding to the application includes, but is not limited to: configuring an access network corresponding to the application by means of the type of the application; configuring an access network corresponding to the application by means of the name of the application; configuring a service name corresponding to the application by means of the service quality required by the application. For example, there are two application, which are "Glory of Kings" and "shipin" respectively, on a terminal, an access network corresponding to the application is set to be "ZTE_SSID_GAME" according to an application name "Glory of Kings", and an access network corresponding to the application is set to be "ZTE_SSID_VIDEO" according to an application name "shipin". For example, a terminal sets network slices corresponding to different application types; when the type of an application is a game, an access network corresponding to the application type is set to be "ZTE_SSID_GAME"; when the type of the application is a video, an access network corresponding to the application type is set to be "ZTE_SSID_ VIDEO"; i.e. when it is determined that the type of an application "Glory of Kings" is a game, the access network corresponding to the application is "ZTE_SSID_GAME"; and when it is determined that the type of the application "Shipin" is a video, the access network corresponding to the application is "ZTE_SSID VIDEO". For another example, when it is determined that the application "Glory of Kings" needs low-delay service quality, an access network corresponding to the application "Glory of Kings" is set to be "ZTE_SSID_GAME"; and when it is determined that the application "Shipin" needs high-rate service quality, an access network corresponding to the application "Shipin" is set to be "ZTE_SSID_VIDEO". Thus, the effect of a specific application performing communication by means of a designated network slice is achieved, for example, Glory of Kings -> ZTE_SSID_GAME-> "a game network slice having a low-latency network capability".

S205, when an application starts, the terminal determines a corresponding SSID according to the application, and connects same.

In some embodiments, the terminal connects "ZTE SSID NORMAL" by default. A terminal performs a default communication service on the basis of the SSID; when the terminal runs an application "Toutiao", as the APP does not configure an SSID individually, the default "ZTE_SSID_NORMAL" continues to be used for communication; in this case, a data flow: "Toutiao" <->ZTE_SSID_NORMAL<-> "fixed access network slice". When a terminal switches an application and runs "Gloary Of Kings" and the application is started, it is checked that the self-defined SSID has been configured, and a connection to the self-defined SSID, i.e. "ZTE_SSID_GAME", of the application is triggered, in this case, the data flow is: Glory of kings <->ZTE_SSID_GAME<-> "a game network slice having a low-latency network capability". It should be understood that when a terminal supports a multi-Wi-Fi connection, the terminal may maintain the connection of "ZTE_SSID_NORMAL", is connected to "ZTE_SSID_GAME" at the same time, and performs communication of "Glory of kings" by means of "ZTE_SSID_GAME". When a terminal continues to switch an application and runs "shipin" and the application is started, it is checked that the self-defined SSID has been configured, and a connection to the self-defined SSID, i.e. "ZTE_SSID_VIDEO", of the application is triggered, and in this case, the data flow is: shipin <->ZTE_SSID VIDEO<-> "a video network slice having high-rate service quality". It should be understood that, various applications are bound to a "network port" corresponding to the SSID, and for example, may be implemented by using SO_BINDTODEVICE of the socket on a Linux operating system.

Step S206, when the application is closed, the terminal disconnects the corresponding SSID connection.

In some embodiments, when exiting the application configured with the SSID, the terminal triggers the disconnection of the configured SSID and returns to the default connection. For example, the terminal exits "Glory of Kings", and when the application exits, it is checked that the SSID has been configured, a disconnection of the configured SSID, i.e. "ZTE_SSID_GAME" procedure is triggered, and the terminal is reconnected to the "ZTE_SSID_NORMAL".

In the present embodiment, a gateway-type device performs multi-slice establishment and multi-SSID establishment, and finally maps various SSIDs to different network slices; a terminal configures an SSID corresponding to an application, determines, when the application is started, a corresponding SSID according to the application and is connected thereto, and disconnects the corresponding SSID when the application is closed. The gateway-type device performs mapping to different network slices on the basis of multiple SSIDs, so as to implement different network slices corresponding to different SSIDs. The terminal implements a correlation of "application->SSID->network slice" and the correspondence between applications and network slices on the basis of a correlation between applications and SSIDs. It achieves that a terminal flexibly selects a network slice according to an application, and avoids the problem that a terminal can only select, according to the signal strength of a WLAN, the network an electronic device is to access, which is too monotonous, and cannot flexibly access a specific network slice.

### Embodiment III:

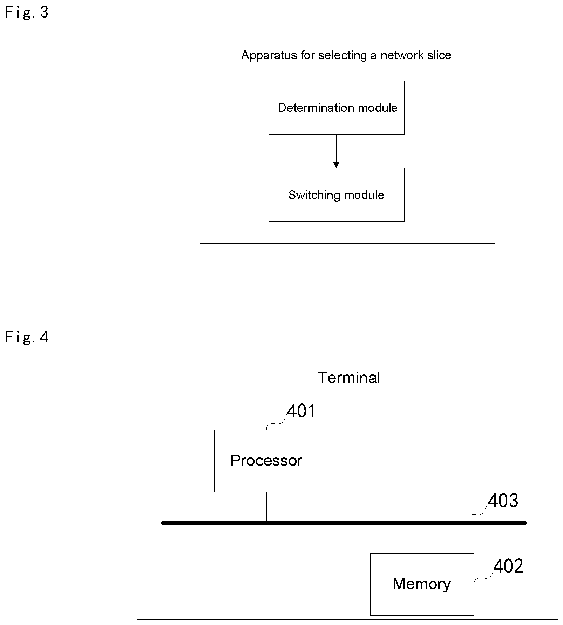

The present embodiment further provides an apparatus for selecting a network slice. As shown in FIG. 3, the apparatus includes:
a determination module, configured to determine, when the application is started, a corresponding first access network according to an application; and
a switching module, configured to switch from a second access network to the first access network, and perform communication by means of the first access network, the first access network and the second access network respectively corresponding to different network slices.

The present embodiment further provides a terminal. Referring to FIG. 4, the terminal includes a processor 401, a memory 402, and a communication bus 403, wherein
the communication bus 103 is configured to implement connection and communication between the processor 401 and the memory 402.

The processor 401 is configured to execute one or more computer programs stored in the memory 402, so as to implement at least one step in the method for selecting a network slice in Embodiment I and Embodiment II.

The present embodiment also provides a computer-readable storage medium that includes volatile or non-volatile, removable or non-removable media implemented in any method or technology for storage of information (such as computer-readable instructions), data structures, computer program modules, or other data. The storage media include but are not limited to, random access memory (RAM), read-only memory (ROM), electrically erasable programmable read only memory (EEPROM), flash memory or other memory technology, compact disc read-only memory (CD-ROM), digital versatile disk (DVD) or other optical disk storage, magnetic cassettes, magnetic tapes, magnetic disk storage or other magnetic storage devices, or any other medium which can be used to store desired information and can be accessed by a computer.

The computer readable storage medium in the present embodiment may be configured to store one or more computer programs, and the stored one or more computer programs may be executed by a processor, so as to implement at least one step of the method for selecting a network slice in Embodiment I and Embodiment II.

According to the method and apparatus for selecting a network slice, the terminal and the computer-readable storage medium provided in the embodiments of the present invention, when an application is started, a corresponding first access network is determined according to the application; it is switched from the second access network to the first access network, and communication is performed by means of the first access network. The first access network and the second access network respectively correspond to different network slices; and a correlation of "application->access network->network slice" is achieved in some implementation processes on the basis of a correlation between applications and different access networks, thereby achieving correspondence between applications and network slices. By means of the present invention, a terminal flexibly selects an access network according to an application, thereby achieving the effect of flexibly selecting a network slice according to the application, and avoiding the problem that a terminal can only select, according to the signal strength of a WLAN, the network an electronic device is to access, which is too monotonous, and cannot flexibly access a specific network slice.

Hence, a person skilled in the art should understand that the functional modules/units in all or some of the operations, systems and devices in the methods disclosed above may be implemented as software (which may be implemented by computer program codes executable by a computing device), firmware, hardware and appropriate combinations thereof. In a hardware embodiment, the division of functional modules/units mentioned in the description above does not necessarily correspond to the division of physical components; for example, one physical component may have multiple functions, or one function or operation may be performed cooperatively by several physical components. Some or all of the physical components may be implemented as software executed by a processor, such as a central processing unit, a digital signal processor, or a microprocessor, or implemented as hardware, or implemented as an integrated circuit, such as an application specific integrated circuit.

In addition, as known to a person of ordinary skill in the art, communication media typically include computer-readable instructions, data structures, computer program modules, or other data in a modulated data signal such as a carrier or other transport mechanisms, and may include any information delivery media. Hence, the present invention is not limited to any specific combinations of hardware and software.

The content above relates to further detailed description of embodiments of the present invention in conjunction with specific embodiments, and it cannot be determined that the specific embodiments of present invention are only limited to these illustrations. For a person of ordinary skill in the technical field to which the present invention belongs, several simple deductions or replacements may also be made without departing from the concept of some embodiments of the present invention, and all these deductions and improvements shall be considered as belonging to the scope of protection of the present invention.

## Claims

1. A method for selecting a network slice, comprising:
when an application is started, determining a corresponding first access network according to the application; and
switching from a second access network to the first access network, and performing communication by means of the first access network,
the first access network and the second access network respectively corresponding to different network slices.

2. The method for selecting a network slice according to claim 1, wherein determining a corresponding first access network according to the application comprises any one of the following:
determining the corresponding first access network according to a type of the application;
determining the corresponding first access network according to a name of the application; and
determining the corresponding first access network according to service quality required by the application.

3. The method for selecting a network slice according to any one of claims 1-2, wherein before determining a corresponding first access network according to the application, the method further comprises:
configuring the first access network corresponding to the application.

4. The method for selecting a network slice according to claim 3, wherein the first access network and the second access network are different access networks on a same network device.

5. The method for selecting a network slice according to claim 4, wherein switching from a second access network to the first access network, and performing communication by means of the first access network comprise:
keeping the connection of the second access network, switching a current communication network from the second access network to the first access network, and performing communication by means of the first access network.

6. The method for selecting a network slice according to claim 4, wherein switching from a second access network to the first access network, and performing communication by means of the first access network comprise:
disconnecting the second access network, taking the first access network as a current communication network, and performing communication by means of the first access network.

7. The method for selecting a network slice according to any one of claims 4-6, further comprising:
when exiting the application, switching from the first access network to a default access network, and performing communication by means of the default access network.

8. An apparatus for selecting a network slice, comprising:
a determination module, configured to determine, when the application is started, a corresponding first access network according to an application;
a switching module, configured to switch from a second access network to the first access network, and perform communication by means of the first access network, the first access network and the second access network respectively corresponding to different network slices.

9. A terminal, the terminal comprising a processor, a memory and a communication bus,
the communications bus being configured to implement connection and communication between the processor and the memory, and
the processor being configured to execute one or more computer programs stored in the memory, so as to implement steps of the method for selecting a network slice according to any one of claims 1 to 7.

10. A computer readable storage medium, wherein the computer readable storage medium stores one or more computer programs, and the one or more computer programs are executed by one or more processors, so as to implement the steps of the method for selecting a network slice according to any one of claims 1 to 7.
